# EUROPÄISCHE PATENTSCHRIFT

(11) **EP 2 687 632 B1**
(45) Veröffentlichungstag und Bekanntmachung des Hinweises auf die Patenterteilung: **07.10.2015**
(21) Anmeldenummer: 12177340.2
(22) Anmeldetag: 20.07.2012
(51) Int. Cl.: E01F 9/011

(54) **Vorrichtung und Montagebrücke zur Abhängung eines Bauteils**
Device and gantry for hanging a component
Dispositif et pont de montage pour la suspension d'un composant

(43) Veröffentlichungstag der Anmeldung: 22.01.2014
(73) Patentinhaber: Kapsch TrafficCom AG, 1120 Wien (AT)
(72) Erfinder: Trögl, Arnold, 2500 Baden (AT); Hackl, Leopold, 3664 Martinsberg (AT)
(74) Vertreter: Weiser, Andreas

(56) Entgegenhaltungen:
- WO-A1-98/35330
- WO-A1-2008/056017
- FR-A1- 2 831 567

## Beschreibung

Die vorliegende Erfindung betrifft eine Vorrichtung zur Abhängung von Bauteilen, insbesondere Kameras, Radargeräten, Laserscannern od.dgl., von einer Montagebrücke, welche beispielsweise eine Straße überspannt, mit einer an der Montagebrücke in etwa vertikaler Ausrichtung befestigbaren Führungsschiene und einem auf der Führungsschiene gleitverschieblich geführten Schlitten, auf dem der Bauteil montierbar ist. Die Erfindung betrifft ferner eine mit einer solchen Vorrichtung ausgestattete Montagebrücke.

Straßenüberspannende Montagebrücken ("Gantrys") tragen häufig schwere und komplexe Bauteile der genannten Art, die einerseits in einer abgehängten bzw. auskragenden Stellung sicher verankert und andererseits immer wieder gereinigt, gewartet und justiert werden müssen. Um für diese Zwecke vorübergehend Zugang zu den Bauteilen zu erhalten, muss derzeit entweder die Straße abgesperrt werden oder das Wartungspersonal sich gesichert von der Brücke abseilen oder es sind komplizierte bewegliche Abhängungskonstruktionen erforderlich.

Aus der WO 98/35330 A1 ist eine Absenkhalterung für eine Montagebrücke bekannt, bei der ein Schlitten, der einen Fahrzeugdetektor trägt, an einer vertikalen Tragschiene verschieblich gelagert ist. Da der Schlitten stets von der Montagebrücke abgewandt ist, ist der Fahrzeugdetektor auch hier nur schwer zu reinigen, warten und justieren.

Die Erfindung setzt sich zum Ziel, die Nachteile des bekannten Standes der Technik zu überwinden und eine einfache, sichere und wartungsfreundliche Lösung zur Abhängung eines Bauteils von einer Montagebrücke zu schaffen.

Dieses Ziel wird in einem ersten Aspekt der Erfindung mit einer Vorrichtung der eingangs genannten Art erreicht, die sich auszeichnet durch einen auf der Führungsschiene unterhalb des Schlittens höhenverstellbar gelagerten Endanschlag, wobei die Führungsschiene in einen unteren Teil und einen oberen Teil unterteilt ist, welche über eine Schwenkverbindung mit einer zur Längsrichtung der Führungsschiene parallelen Schwenkachse miteinander verbunden sind.

Auf diese Weise kann der Bauteil mit Hilfe des Schlittens von einer abgesenkten Montage- und Betriebsstellung in eine angehobene Wartungs-, Reinigungs- und Justierstellung verbracht werden, in welcher er von der Montagebrücke aus leicht zugänglich bzw. erreichbar ist, ohne dass das Betriebspersonal sich dazu für Außenarbeiten an der Brücke absichern müsste oder ein Zugang von unten und damit eine Straßensperre erforderlich wären. Der auf der Führungsschiene höhenverstellbar gelagerte Endanschlag definiert die Position des Schlittens und damit des Bauteils in der abgesenkten Montage- und Betriebsstellung, welche somit einfach vorwählbar und jederzeit reproduzierbar ist. Gemäß der Erfindung kann der Schlitten, wenn er in seine angehobene Stellung auf den oberen Teil verbracht wird, mitsamt dem oberen Teil verschwenkt werden, während der untere Teil an der Montagebrücke starr befestigt bleibt. Der Schlitten kann so in eine dem Benutzer zugewandte Stellung über die Montagebrücke verschwenkt werden, was den Zugang zum Bauteil für Wartungs-, Reinigungs- und Justierarbeiten weiter erleichtert.

Bevorzugt liegt die Schwenkachse der Schwenkverbindung außerhalb der Führungsschiene, so dass der untere Teil und der obere Teil in und außer Fluchtung schwenkbar sind, wodurch der in den oberen Teil angehobene Schlitten dem Benutzer noch näher zugeschwenkt werden kann.

Besonders günstig ist es, wenn die Führungsschiene an einem oberen Ende einen Flaschenzug und/oder eine Wickeltrommel für ein am Schlitten angreifendes Zugseil trägt, was das Anheben des Schlittens wesentlich erleichtert.

Gemäß einer weiteren bevorzugten Ausführungsform hat die Führungsschiene zumindest zwei seitlich abstehende Stege und der Endanschlag zumindest zwei L- bzw. U-förmige Laschen, welche die Stege mit Spiel umgreifen, wobei der Endanschlag zumindest ein bewegliches Klemmelement zum Arretieren des Spiels enthält. Der Endanschlag kann damit auf der gewünschten Höhe festgesetzt werden, um die abgesenkte Stellung des Schlittens mit dem Bauteil zu definieren.

Bevorzugt ist das Klemmelement ein Keil, der im Endanschlag an der Führungsschiene anliegend lineargeführt und von einer Spannschraube durchsetzt ist, welche beim Anziehen den Keil zwischen eine Fläche des Endanschlags und die Führungsschiene treibt. Dadurch kann der Endanschlag rasch und sicher in jeder beliebigen Höhe festgeklemmt werden. Durch die gewählte Keilform klemmt der Endanschlag bereits ohne Anziehen der Spannschraube auf der gewünschten Höhe; die Spannschraube verstärkt die Wirkung des keilförmigen Klemmelements und dient als zusätzliche Sicherung.

Besonders günstig ist es dabei, wenn die Spannschraube von der Oberseite des Endanschlags her zugänglich ist. Auf diese Weise kann der Endanschlag direkt von der Montagebrücke her im Betrieb verstellt werden, z.B. zu Justierzwecken.

Gemäß einer weiteren vorteilhaften Ausführungsform der Erfindung hat die Führungsschiene zumindest zwei seitlich abstehende Stege und der Schlitten zumindest vier Rollenpaare, von denen zwei Paare den einen Steg und zwei Paare den anderen Steg jeweils ergreifen und darauf abrollen. Dies ergibt eine sehr stabile und präzise Führung des Schlittens, welcher eine genaue Ausrichtung des Bauteils, z.B. einer Kamera oder Scanners, ermöglicht.

Besonders günstig ist es, wenn die Führungsschiene im Querschnitt ein Doppel-T-Profil hat, wobei die Schenkel des einen T die beiden Stege bilden und die Schenkel des anderen T an der Montagebrücke befestigbar sind, was hohe Tragfestigkeit und Verwindungssteifigkeit ergibt.

Bevorzugt hat eine der Komponenten Schlitten und Endanschlag zumindest eine Zentrierbohrung und die andere Komponente zumindest einen damit in Eingriff bringbaren, bevorzugt kegelstumpfförmigen und besonders bevorzugt zusätzlich schräggestellten Zentrierstift. Dadurch ergibt sich beim Absenken des Schlittens auf den Endanschlag eine Selbstzentrierung und -justierung des Schlittens in einer definierten, reproduzierbaren Stellung auf dem Endanschlag bei gleichzeitiger Fixierung des Schlittens durch Pressen gegen die Führungsschiene. Die bevorzugte Schrägstellung des Zentrierstifts erhöht dabei die Anpresswirkung. Die Verwendung von mehr als einem Zentrierstift ermöglicht eine zusätzliche Fixierung des Schlittens gegen Verdrehung.

Gemäß einer weiteren bevorzugten Ausführungsform der Erfindung kann die Führungsschiene auch mehr als einen Schlitten führen. Dazu wird bevorzugt vorgesehen, dass der Schlitten über eine Zentrierkupplung mit einem weiteren Schlitten kuppelbar ist. Die Schlitten können so nacheinander und aufeinander abgesenkt werden und zentrieren sich jeweils aneinander in definierten, reproduzierbaren Stellungen.

In einem weiteren Aspekt schafft die Erfindung eine Montagebrücke, welche mit einer Vorrichtung der hier vorgestellten Art ausgestattet ist, die mit etwa vertikal ausgerichteter Führungsschiene an der Montagebrücke befestigt ist.

Bevorzugt trägt die Montagebrücke einen begehbaren und mit einem seitlichen Geländer gesicherten Steig, wobei die Führungsschiene außerhalb des Geländers vertikal nach unten verläuft. Die Führungsschiene kann dadurch in einfacher Weise nach unten unter den Steig bzw. auch unter die Brücke vorragen, um den bzw. die Bauteile abzuhängen, während der Benutzer gesichert hinter dem Geländer auf dem Steig stehen kann.

Besonders günstig ist es dabei, wenn eine zweigeteilte, mit einer Schwenkverbindung ausgestattete Führungsschiene verwendet wird, wobei die Schwenkverbindung auf oder über der Höhe des Geländers liegt und der untere Teil der zweigeteilten Führungsschiene an der Montagebrücke bzw. deren Geländer befestigt ist. Der obere Teil der zweigeteilten Führungsschiene kann dadurch über das Geländer in den Bereich über den Steig geschwenkt werden, wo der Bauteil mit den auf den oberen Teil überführten Schlitten zu Wartungs-, Reinigungs- bzw. Justierungszwecken gut zugänglich ist, ohne dass der Benutzer den gesicherten Steig verlassen muss.

Die erfindungsgemäße Vorrichtung ist für jede Art von Montagebrücke und Bauteil geeignet. Bevorzugt ist die Montagebrücke eine straßenüberspannende Montagebrücke ("Gantry") für Verkehrsüberwachungszwecke und der Bauteil ist eine Kamera, ein Radargerät oder ein Laserscanner.

Die Erfindung wird nachstehend anhand eines in den beigeschlossenen Zeichnungen dargestellten Ausführungsbeispiels näher erläutert. In den Zeichnungen zeigt:
Fig. 1 die Montagebrücke der Erfindung mit mehreren erfindungsgemäßen Vorrichtungen in einer Perspektivansicht im Überblick;
Fig. 2 eine der Vorrichtungen von Fig. 1 in einer Seitenansicht;
die Fig. 3a und 3b die Vorrichtung von Fig. 2 in einer Draufsicht in zwei verschiedenen Betriebsstellungen;
Fig. 4 einen Teil der Vorrichtung von Fig. 2 in einer Perspektivansicht; und
die Fig. 5a und 5b den Endanschlag der Vorrichtung der Fig. 2 - 4 in einer Draufsicht (Fig. 5a) und einer Schnittansicht (Fig. 5b) gemäß der Schnittlinie A-A von Fig. 5a.

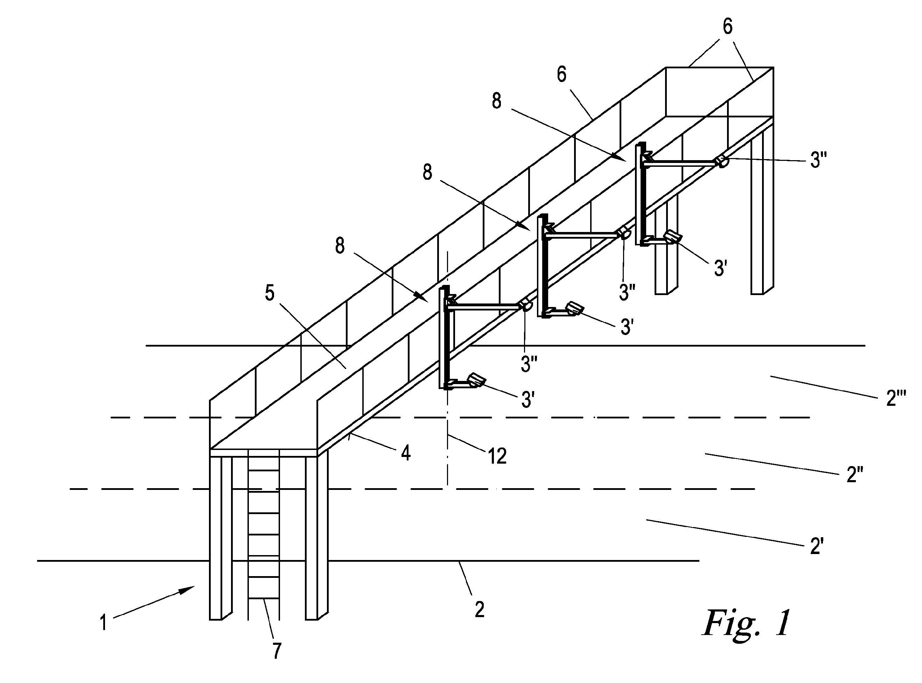

Fig. 1 zeigt eine Montagebrücke ("Gantry") 1, welche eine Straße 2 mit einer oder mehreren Fahrspuren 2', 2", 2"' überspannt und zur Abhängung von Bauteilen 3 wie Kameras 3', Laserscannern 3", Radargeräten (nicht gezeigt) od.dgl. dient. Unter dem Begriff "Abhängung" werden in der vorliegenden Beschreibung auch Auskragungen oder Montagen auf etwa der Brückenhöhe der Montagebrücke 1 verstanden, d.h. die Bauteile 3 müssen nicht notwendigerweise unter die Unterseite 4 der Montagebrücke 1 nach unten vorstehen, insbesondere wenn die Montagebrücke 1 eine große Aufbauhöhe h hat.

Die Montagebrücke 1 trägt einen Steig 5, der mit einem oder mehreren seitlichen Geländern 6 gesichert ist. Über eine Leiter 7 kann der Steig 5 vom Boden aus erreicht werden.

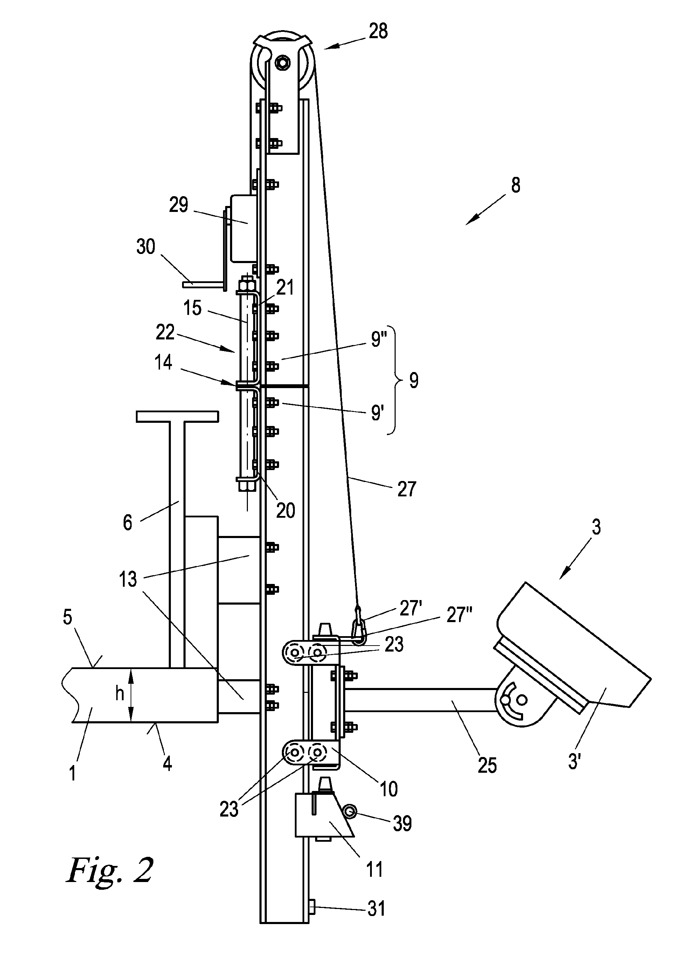

Die Montagebrücke 1 trägt ferner eine oder mehrere Vorrichtungen 8 zur Verankerung bzw. Abhängung jeweils eines oder mehrerer Bauteile 3. Die Vorrichtungen 8 sind seitlich außerhalb des Geländers 6 an der Montagebrücke 1 befestigt und eine der Vorrichtungen 8 ist in den Fig. 2 - 5 im Detail dargestellt.

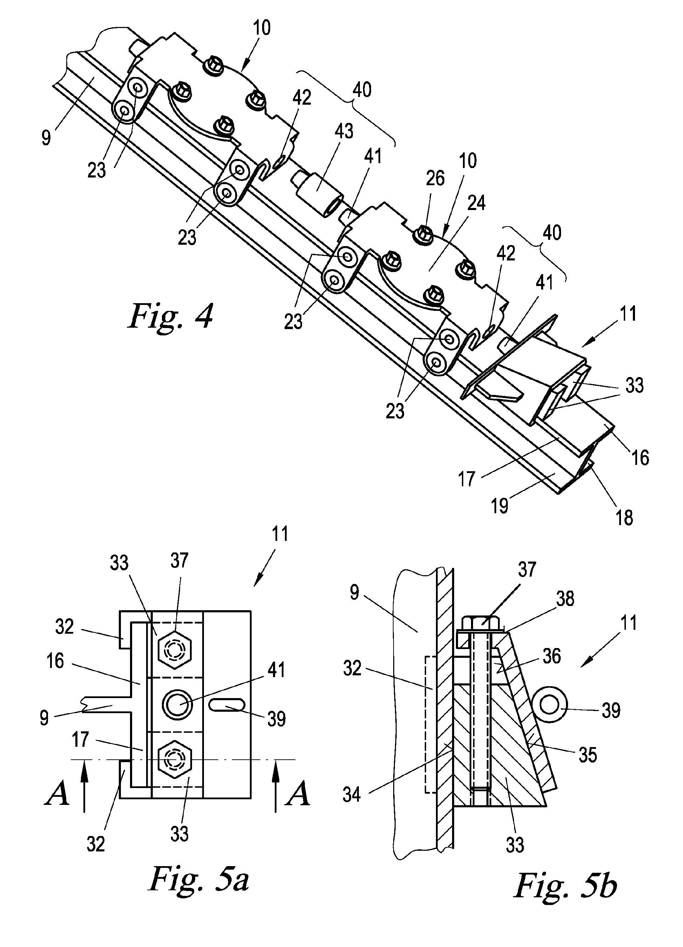

Gemäß den Fig. 2 und 4 umfasst die Vorrichtung 8 eine Führungsschiene 9, zumindest einen darauf gleitverschieblich geführten Schlitten 10 und einen auf der Führungsschiene 9 unterhalb des Schlittens 10 höhenverstellbar gelagerten Endanschlag 11 (Fig. 5). Die Führungsschiene 9 ist in etwa vertikaler Ausrichtung, d.h. mit ihrer Längs- und Führungsachse 12 in etwa vertikaler Lage, an der Montagebrücke 1 befestigt, beispielsweise über Verankerungswinkel und -bolzen 13 an der Montagebrücke 1 und/oder deren Geländer 6.

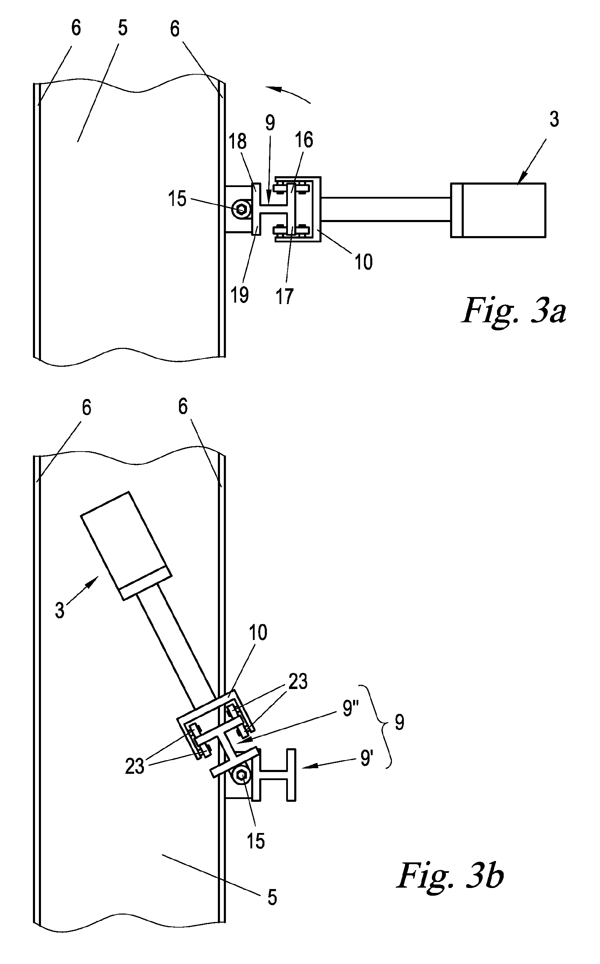

Wie in den Fig. 2 und 3 gezeigt, ist die Führungsschiene 9 bevorzugt - wenn auch nicht zwingend - zweigeteilt, und zwar in einen unteren, starr an der Montagebrücke 1 bzw. deren Geländer 6 befestigten Teil 9' und einen oberen Teil 9", der über eine Schwenkverbindung 14 schwenkbar, bevorzugt um 360° drehbar, mit dem unteren Teil 9' verbunden ist. Die Schwenkverbindung 14 hat eine zur Längsrichtung 12 der Führungsschiene 9 parallele Schwenkachse 15. Wie in Fig. 3 gezeigt, kann dadurch der obere Teil 9" der Führungsschiene 9 von einer mit dem unteren Teil 9' fluchtenden Stellung (Fig. 3a) in eine über das Geländer 6 und den Steig 5 verdrehte Wartungsstellung (Fig. 3b) verschwenkt werden. Wenn - wie weiter unten noch erläutert - dabei der Schlitten 10 mit dem Bauteil 3 sich auf dem oberen Teil 9" befindet, kann dadurch der Bauteil 3 zu Wartungs-, Reinigungs- und Justierungszwecken in den gesicherten Arbeitsbereich des Benutzers auf dem Steig 5 gebracht werden.

In der dargestellten Ausführungsform hat die Führungsschiene 9 bzw. haben ihre Teile 9', 9" im Querschnitt ein Doppel-T-Profil ("H-Profil"), wobei die Schenkel 16, 17 des einen T zwei der Montagebrücke 1 abgewandte Stege für das Abrollen des Schlittens 10 bilden und die Schenkel 18, 19 des anderen T zwei Montageleisten für die Befestigung an der Montagebrücke 1 bzw. dem Geländer 6 bilden, z.B. für den Angriff der Verankerungswinkel und -bolzen 13. Die Stege 18, 19 können auch für die Verankerung der Schwenkverbindung 14 mitverwendet werden, welche Montagewinkel 20, 21 zur Lagerung eines Achsbolzens 22 umfasst. Dadurch ist die Drehachse 15 der Schwenkverbindung 14 außerhalb der Führungsschiene 9, was den wirksamen Schwenkarm beim Verschwenken (Fig. 3a - 3b) verlängert und dadurch die Erreichbarkeit des Bauteils 3 in der Wartungsstellung (Fig. 3b) verbessert.

Auf der Führungsschiene 9, genauer den äußeren Stegen 16, 17, ist der Schlitten 10 gleitend geführt. Der Schlitten 10 kann dazu zumindest drei, bevorzugt vier oder mehr Rollenpaare 23 lagern, welche jeweils einen Steg 16, 17 zwischeneinander ergreifen und darauf abrollen, d.h. zwei (voneinander beabstandete) Rollenpaare 23 für den einen Steg 16 und zwei (voneinander beabstandete) Rollenpaare 23 für den anderen Steg 17. Der Schlitten 10 bildet eine Montageplattform 24 für die Anbringung des Bauteils 3, beispielsweise über entsprechende Montagewinkel 25, die mittels Schrauben 26 in Bohrungen der Plattform 24 verankert werden können.

Mit Hilfe eines Zugseils 27, das beispielsweise über einen Karabiner 27' an einer Öse 27" des Schlittens 10 angreift, kann der Schlitten 10 von einer Bedienungsperson auf dem Steig 5 von einer auf den unteren Teil 9' abgesenkten Montagestellung in eine auf den oberen Teil 9" angehobene Wartungsstellung verbracht werden und umgekehrt. Zur Bedienung des Zugseils 29 trägt die Führungsschiene 9 an ihrem oberen Ende bevorzugt einen Flaschenzug, eine Umlenkrolle 28 und/oder eine Wickeltrommel 29, die von einem Elektromotor oder einer Kurbel 30 betätigbar ist, um das Zugseil 27 auf- und abzuwickeln. Das Zugseil 27 ist beispielsweise ein Stahldraht oder -seil, es fallen jedoch auch Varianten wie Ketten, Kunststoffseile od.dgl. darunter.

Der Schlitten 10 wird in der abgesenkten Stellung durch den Endanschlag 11 nach unten hin abgestützt und gesichert. Der Endanschlag 11 ist in einer beliebigen Höhe auf der Führungsschiene 9 feststellbar und definiert dadurch die untere Endlage des Schlittens 10 und damit die Montagehöhe des Bauteils 3. Unterhalb des Endanschlags 11, am untersten Ende der Führungsschiene 9, kann diese zusätzlich mit einem Stopper 31 versehen werden, um gleichsam als "Verliersicherung" während der Montage ein Abgleiten des Endanschlags 11 oder Schlittens 9 nach unten zu verhindern.

Die Fig. 5a und 5b zeigen eine Ausführungsform des Endanschlags 11 im Detail. Der Endanschlag 11 umgreift mittels zweier L- bzw. U-förmiger Laschen 32 die Stege 16, 17 der Führungsschiene 9 und gleitet auf diesen mit Spiel ab. Das Spiel kann mit Hilfe eines am Endanschlag 11 beweglich gelagerten Klemmelements, z.B. einer Schraube od.dgl., jederzeit arretiert werden, um den Endanschlag 11 auf der gewünschten Höhe festzuklemmen. Bevorzugt ist das Klemmelement wie gezeigt durch zwei Keile 33 gebildet, welche auf ihrer einen Keilseite 34 an der Führungsschiene 9 zur Anlage bringbar sind und auf ihrer anderen Keilseite 35 an einer schrägen Innenfläche 36 des Endanschlags 11 entlanggleiten und von einer Spannschraube 37 durchsetzt sind. Durch Anziehen der Spannschraube 37 gleitet der Keil 33 nach oben und entlang der schrägen Fläche 36, sodass er gleichsam zwischen die Außenseite der Führungsschiene 9 (bzw. deren Stege 16, 17) und die Innenfläche 36 des Endanschlags 11 getrieben wird.

Die Spannschrauben 37 der Keile 33 sind bevorzugt von der Oberseite 38 des Endanschlags 11 von oben zugänglich und können beispielsweise mit Hilfe eines langen Spannschlüssels von der Bedienungsperson auf dem Steig 5 betätigt werden. Der Endanschlag 11 besitzt dazu eine Öse 39, durch welche vorübergehend ein Halteseil geführt werden kann, um den Endanschlag 11 auf die gewünschte Höhe abzulassen, woraufhin die Spannschrauben 37 angezogen werden, um den Endanschlag 11 auf dieser Höhe festzuklemmen. Das durch die Öse 39 geführte Halteseil kann dann entfernt werden.

Anschließend können ein oder mehrere Schlitten 10 auf die Führungsschiene 9 bzw. deren Stege 16, 17 aufgefädelt und mit Hilfe des Zugseils 27 nach unten abgelassen werden, bis sie auf dem Endanschlag 11 aufsitzen bzw. daran anschlagen.

Der Sitz zwischen Schlitten 10 und Endanschlag 11 kann mit Hilfe einer Zentrierkupplung 40 in lateraler Richtung positionsdefiniert werden. Die Zentrierkupplung 40 umfasst beispielsweise einen konischen, bevorzugt kegelstumpfförmigen Zentrierstift 41 auf einem der Teile Schlitten 10 und Endanschlag 11 und eine dazu passende Zentrierbohrung 42 auf dem jeweils anderen Teil. Es können auch mehr als eine Zentrierkupplung 40 zwischen einem Schlitten 10 und dem Endanschlag 11 vorgesehen werden (nicht dargestellt), um auch die Winkellage zwischen diesen zu definieren.

Auch ist es möglich, dass mehrere übereinander angeordnete Schlitten 10 über zwischenliegende Zentrierkupplungen 40 gegeneinander zentriert bzw. ausgerichtet werden, wie in Fig. 4 gezeigt. Die Zentrierkupplung 40 kann dabei zusätzlich einen zentrierenden Abstandhaltestift 43 umfassen, welcher den Zentrierstift 41 verlängert und in die Zentrierbohrung 42 des jeweils anderen Teils eingreift.

Wenn der Bauteil 3, z.B. ein Laserscanner 3", im oberen Teil 9" der Führungsschiene 9 befestigt werden soll, d.h. nicht nach unten abgelassen werden muss, kann anstelle eines Endanschlags 11 auch eine andere Einrichtung zur Höhenfixierung des Schlittens 10 an der Führungsschiene 9 verwendet werden, beispielsweise der Schlitten 10 direkt auf der gewünschten Höhe der Führungsschiene 9 festgeschraubt oder mit Hilfe einer auf die Führungsschiene 9 geschraubten Halteplatte fixiert werden.

Die Erfindung ist nicht auf die dargestellten Ausführungsformen beschränkt, sondern umfasst alle Varianten und Modifikationen, die in den Rahmen der angeschlossenen Ansprüche fallen.

## Patentansprüche

1. Vorrichtung zur Abhängung zumindest eines Bauteils von einer Montagebrücke, mit
einer an der Montagebrücke (1) in etwa vertikaler Ausrichtung befestigbaren Führungsschiene (9), und
einem auf der Führungsschiene (9) gleitverschieblich geführten Schlitten (10), auf dem der Bauteil (3) montierbar ist,
**gekennzeichnet durch**
einen auf der Führungsschiene (9) unterhalb des Schlittens (10) höhenverstellbar gelagerten Endanschlag (11),
wobei die Führungsschiene (9) in einen unteren Teil (9') und einen oberen Teil (9") unterteilt ist, welche über eine Schwenkverbindung (14) mit einer zur Längsrichtung (12) der Führungsschiene (9) parallelen Schwenkachse (15) miteinander verbunden sind.

2. Vorrichtung nach Anspruch 1, **dadurch gekennzeichnet, dass** die Schwenkachse (15) der Schwenkverbindung (14) außerhalb der Führungsschiene (9) liegt, so dass der untere Teil (9') und der obere Teil (9") in und außer Fluchtung schwenkbar sind.

3. Vorrichtung nach Anspruch 1 oder 2, **dadurch gekennzeichnet, dass** die Führungsschiene (9) an einem oberen Ende einen Flaschenzug (28) und/oder eine Wickeltrommel (29) für ein am Schlitten (10) angreifendes Zugseil (27) trägt.

4. Vorrichtung nach einem der Ansprüche 1 bis 3, **dadurch gekennzeichnet, dass** die Führungsschiene (9) zumindest zwei seitlich abstehende Stege (16, 17) und der Endanschlag (11) zumindest zwei L- bzw. U-förmige Laschen (32) hat, welche die Stege (16, 17) mit Spiel umgreifen, wobei der Endanschlag (11) zumindest ein bewegliches Klemmelement (33) zum Arretieren des Spiels enthält.

5. Vorrichtung nach Anspruch 4, **dadurch gekennzeichnet, dass** das Klemmelement (33) ein Keil ist, der im Endanschlag (11) an der Führungsschiene (9) anliegend lineargeführt und von einer Spannschraube (37) durchsetzt ist, welche beim Anziehen den Keil (33) zwischen eine Fläche (36) des Endanschlags (11) und die Führungsschiene (9) treibt.

6. Vorrichtung nach Anspruch 5, **dadurch gekennzeichnet, dass** die Spannschraube (37) von der Oberseite (38) des Endanschlags (11) her zugänglich ist.

7. Vorrichtung nach einem der Ansprüche 1 bis 6, **dadurch gekennzeichnet, dass** die Führungsschiene (9) zumindest zwei seitlich abstehende Stege (16, 17) und der Schlitten (10) zumindest vier Rollenpaare (23) hat, von denen zwei Paare (23) den einen Steg (16) und zwei Paare (23) den anderen Steg (17) jeweils ergreifen und darauf abrollen.

8. Vorrichtung nach einem der Ansprüche 4 bis 7, **dadurch gekennzeichnet, dass** die Führungsschiene (9) im Querschnitt ein Doppel-T-Profil hat, wobei die Schenkel (16, 17) des einen T die beiden Stege bilden und die Schenkel (18, 19) des anderen T an der Montagebrücke (1) befestigbar sind.

9. Vorrichtung nach einem der Ansprüche 1 bis 8, **dadurch gekennzeichnet, dass** eine der Komponenten Schlitten (10) und Endanschlag (11) zumindest eine Zentrierbohrung (40) und die andere Komponente (11, 10) zumindest einen damit in Eingriff bringbaren, bevorzugt kegelstumpfförmigen und besonders bevorzugt zusätzlich schräggestellten Zentrierstift (41) hat.

10. Vorrichtung nach einem der Ansprüche 1 bis 9, **dadurch gekennzeichnet, dass** der Schlitten (10) über eine Zentrierkupplung (40) mit einem weiteren Schlitten (10) kuppelbar ist.

11. Montagebrücke, an der zumindest eine Vorrichtung nach einem der Ansprüche 1 bis 10 mit etwa vertikal ausgerichteter Führungsschiene (9) befestigt ist.

12. Montagebrücke nach Anspruch 11, welche einen begehbaren und mit einem seitlichen Geländer gesicherten Steig trägt, **dadurch gekennzeichnet, dass** die Führungsschiene (9) außerhalb des Geländers (6) vertikal nach unten verläuft.

13. Montagebrücke nach Anspruch 12, **dadurch gekennzeichnet, dass** die Schwenkverbindung (14) auf oder über der Höhe des Geländers (6) liegt.

14. Montagebrücke nach einem der Ansprüche 11 bis 13, **dadurch gekennzeichnet, dass** die Montagebrücke (1) eine Straße (2) überspannt und auf dem Schlitten (10) eine Kamera (3'), ein Radargerät oder ein Laserscanner (3") zur Verkehrsüberwachung montiert ist.

## Claims

1. A device for suspending at least one component from a gantry, comprising:
a guide rail (9) that can be secured on the gantry (1) in an approximately vertical orientation; and
a carriage (10), which is guided on the guide rail (9) in a sliding movable manner and on which the component can be mounted (3); **characterized by**
a limit stop (11), which is mounted on the guide rail (9) beneath the carriage (10) in a height-adjustable manner;
wherein the guide rail (9) is divided into a lower part (9') and an upper part (9"), which are connected to each other by way of a pivot connection (14) having a pivot axis (15) parallel to the longitudinal direction (12) of the guide rail (9).

2. The device according to claim 1, **characterized in that** the pivot axis (15) of the pivot connection (14) is located outside the guide rail (9), so that the lower part (9') and the upper part (9") can be pivoted in and out of alignment.

3. The device according to claim 1 or 2, **characterized in that** an upper end of the guide rail (9) carries a block and tackle (28) and/or a winding drum (29) for a pull cable (27) engaging on the carriage (10).

4. The device according to any one of claims 1 to 3, **characterized in that** the guide rail (9) comprises at least two laterally protruding flanges (16, 17), and the limit stop (11) comprises at least two L- or U-shaped lugs (32), which embrace the flanges (16, 17) with play, the limit stop (11) including at least one movable clamping element (33) for locking the play.

5. The device according to claim 4, **characterized in that** the clamping element (33) is a wedge, which is linearly guided in the limit stop (11) so as to be seated against the guide rail (9) and which is penetrated by a tension screw (37), which drives the wedge (33) between a surface (36) of the limit stop (11) and the guide rail (9) upon tightening.

6. The device according to claim 5, **characterized in that** the tension screw (37) can be accessed from the top side (38) of the limit stop (11).

7. The device according to any one of claims 1 to 6, **characterized in that** the guide rail (9) comprises at least two laterally protruding flanges (16, 17), and the carriage (10) comprises at least four roller pairs (23), of which two pairs (23) engage one flange (16) and two pairs (23) engage the other flange (17), respectively, and roll thereon.

8. The device according to any one of claims 4 to 7, **characterized in that** the cross-section of the guide rail (9) is a double-T profile, the limbs (16, 17) of the one T forming the two flanges and the limbs (18, 19) of the other T being securable to the gantry (1).

9. The device according to any one of claims 1 to 8, **characterized in that** one of the components that are the carriage (10) and the limit stop (11) has at least one centering hole (40), and the other component (11, 10) has at least one preferably truncated cone-shaped, and particularly preferably additionally obliquely positioned, centering pin (41), which can be engaged in the hole.

10. The device according to any one of claims 1 to 9, **characterized in that** the carriage (10) can be coupled to an additional carriage (10) by way of a centering coupling (40).

11. A gantry, on which at least one device according to any one of claims 1 to 10 is secured by way of an approximately vertically oriented guide rail (9).

12. The gantry according to claim 11, comprising a walk-on catwalk that is secured by a lateral railing, **characterized in that** the guide rail (9) runs vertically downward outside the railing (6).

13. The gantry according to claim 12, **characterized in that** the pivot connection (14) is located at or above the height of the railing (6).

14. The gantry according to any one of claims 11 to 13, **characterized in that** the gantry (1) spans a road (2), and a camera (3'), a radar device or a laser scanner (3") for monitoring traffic is mounted on the carriage (10).

## Revendications

1. Dispositif pour la suspension d'au moins un composant d'un pont de montage, avec
un rail de guidage (9) pouvant être fixé dans une orientation à peu près verticale sur le pont de montage (1), et
un chariot (10), guidé par coulissement sur le rail de guidage (9), sur lequel le composant (3) peut être monté,
**caractérisé par**
une butée terminale (11), pouvant être déplacée en hauteur en dessous du chariot (10), logée sur le rail de guidage (9),
dans lequel le rail de guidage (9) est divisé en une partie inférieure (9') et une partie supérieure (9"), lesquelles sont reliées ensemble par l'intermédiaire d'une connexion de pivotement (14) avec un axe de pivotement (15) parallèle au rail de guidage (9) dans la direction longitudinale (12).

2. Dispositif selon la revendication 1, **caractérisé en ce que** l'axe de pivotement (15) de la connexion de pivotement (14) se situe en dehors du rail de guidage (9), de sorte que la partie inférieure (9') et la partie supérieure (9") peuvent être pivotées dans l'alignement et en dehors.

3. Dispositif selon les revendications 1 ou 2, **caractérisé en ce que** le rail de guidage (9) porte à une extrémité supérieure un palan (28) et/ou un tambour enrouleur (29) pour une corde (27) fixée sur le chariot (10).

4. Dispositif selon l'une des revendications 1 à 3, **caractérisé en ce que** le rail de guidage (9) possède au moins deux barres (16, 17) saillantes latéralement et que la butée terminale (11) a au moins deux pattes (32) en forme de L, respectivement de U, lesquelles entourent les barres (16, 17) avec du jeu, la butée terminale (11) comportant au moins un élément de serrage (33) mobile pour bloquer le jeu.

5. Dispositif selon la revendication 4, **caractérisé en ce que** l'élément de serrage (33) est une cale qui est guidée linéairement dans la butée terminale (11) et menée adjacent contre le rail de guidage (9), et qui est traversée par une vis de serrage (37), laquelle entraîne la cale (33) entre une surface (36) de la butée terminale (11) et le rail de guidage (9) pendant le serrage.

6. Dispositif selon la revendication 5, **caractérisé en ce que** la vis de serrage (37) est accessible à partir de la face supérieure (38) de la butée terminale (11).

7. Dispositif selon l'une des revendications 1 à 6, **caractérisé en ce que** le rail de guidage (9) possède au moins deux barres (16, 17) saillantes latéralement et que le chariot (10) a au moins quatre paires de roulettes (23), dont deux paires (23) saisissent et roulent sur l'une (16) des barres et deux paires (23) saisissent et roulent respectivement sur l'autre barre (17).

8. Dispositif selon l'une des revendications 4 à 7, **caractérisé en ce que** le rail de guidage (9) possède un profil en double T dans la section transversale, où les épaulements (16, 17) d'un des T forment les deux barres et les épaulements (18, 19) de l'autre T peuvent être fixés sur le pont de montage (1).

9. Dispositif selon l'une des revendications 1 à 8, **caractérisé en ce qu'**une des composantes, chariot (10) et butée terminale (11), possède au moins un alésage de centrage (40) et que l'autre composante (11, 10) a au moins un stylet de centrage (41), pouvant être en prise avec celui-ci, de préférence en forme de cône tronqué et de manière particulièrement préférée, présentant un réglage en inclinaison.

10. Dispositif selon l'une des revendications 1 à 9, **caractérisé en ce que** le chariot (10) peut être couplé avec un autre chariot (10) par l'intermédiaire d'un couplage centré (40).

11. Pont de montage, qui est fixé sur au moins un dispositif selon l'une des revendications 1 à 10 avec un rail de guidage (9) orienté à peu près verticalement.

12. Pont de montage selon la revendication 11, lequel porte un chemin pouvant être empruntée et sécurisée avec une rampe latérale, **caractérisé en ce que** le rail de guidage (9) s'étend verticalement vers le bas en dehors de la rampe (6).

13. Pont de montage selon la revendication 12, **caractérisé en ce que** la connexion de pivotement (14) se situe sur la rampe (6) ou au dessus de la hauteur de la rampe.

14. Pont de montage selon l'une des revendications 11 à 13, **caractérisé en ce que** le pont de montage (1) est suspendu au dessus d'une route (2) et qu'une caméra (3'), un appareil radar ou un scanner laser (3") pour la surveillance du trafic sont montés sur le chariot (10).
